# EUROPEAN PATENT APPLICATION

(11) **EP 2 977 903 A1**
(43) Date of publication of application: **27.01.2016**
(21) Application number: 15177882.6
(22) Date of filing: 22.07.2015
(51) Int. Cl.: G06F 9/54

(54) **SEGMENTED SOFTWARE ARCHITECTURE**

(30) Priority: 24.07.2014 US 201414339581
(71) Applicant: Simmonds Precision Products, Inc., Vergennes, VT 05491 (US)
(72) Inventor: FREY, Kevin U., Williston, VT 05495 (US); THOMAS, William J., Lincoln, VT 05443 (US); SEVERY, Keith, South Burlington, VT 05403 (US)
(74) Representative: Hughes, Andrea Michelle

(57) **Abstract**

In one example, a device includes at least one processor 44 and one or more storage devices 52 encoded with instructions that, when executed by the at least one processor, cause the at least one processor to execute a software program comprising three or more segments (12, 14, 16, 18, 20, 22). Each of the three or more segments includes one or more modules (24, 26, 28, 30, 32, 34). Each respective module is a member of only one of the three or more segments and implements an interface (38, 40) that enables direct communication between the respective module and modules that are members of any other of the three or more segments. All modules that are members of a respective segment implement a common interface associated with the respective segment.

## Description

### BACKGROUND

The present disclosure relates generally to computer-readable instructions for software programs, and in particular to architectures for inter-module communications of software programs.

Many modern computing devices execute software programs that are comprised of multiple modules. Each module may typically correspond to a separate encapsulated portion of data and/or logically-grouped functionality useable by the software program, thereby representing a separation of concerns that can enhance reusability and maintainability of the corresponding software instructions. To further enhance such reusability and maintainability of the software, modules may often be grouped into conceptual layers. Accordingly, a software program may be separated into multiple conceptual layers, each of the layers including modules having a similar and/or related purpose. For instance, those modules related to hardware interactions can be grouped into a hardware-interaction layer, while those modules related to application-level or algorithmic functions may be grouped into an application layer.

Often, data flow within a software program is managed to define a sequential path through the layers. In this way, each of the layers can act on data that is received and/or output from the software program in a defined and predictable sequence to ensure operability of the program as a whole. For instance, data received from hardware (e.g., from a serial port or other communications interface) can flow first through a hardware-interaction layer that manages interactions with hardware components and formats the data before transmitting the data to an application layer. Multiple such layers can add incremental functionality, thereby further separating concerns and increasing modularity of the software program.

However, such a layered approach can decrease flexibility in the routing of data through the system. For instance, data may be required to pass through one or more layers even when certain of those layers do not manipulate the data. That is, data can be required to pass through each successive layer of the architecture to reach a destination layer, even if certain of those intermediate layers do nothing more than pass the data to a next sequential layer. Such rigid requirements on the flow of data can decrease adaptability of the software program, as well as increase a total execution time of the software program to manipulate the data. For instance, because each layer acts successively to manipulate the data, modifications to modules included in one layer can affect modules included in another, thereby possibly requiring significant changes to the software program as a whole to modify any part of the program. Moreover, because inputs to the modules within one layer may depend upon the outputs from each previous layer, it can be difficult to implement and test modules of one layer before the entirety of the software program and/or hardware platform is developed. Accordingly, such layered software architectures can hinder rapid development and testing of software programs.

### SUMMARY

In one example, a device includes at least one processor and one or more storage devices encoded with instructions that, when executed by the at least one processor, cause the at least one processor to execute a software program comprising three or more segments. Each of the three or more segments includes one or more modules. Each respective module is a member of only one of the three or more segments and implements an interface that enables direct communication between the respective module and modules that are members of any other of the three or more segments. All modules that are members of a respective segment implement a common interface associated with the respective segment.

In another example, a computer-readable storage medium is encoded with instructions that, when executed by at least one processor, cause the at least one processor to execute a software program comprising three or more segments. Each of the three or more segments includes one or more modules. Each respective module is a member of only one of the three or more segments and implements an interface that enables direct communication between the respective module and modules that are members of any other of the three or more segments. All modules that are members of a respective segment implement a common interface associated with the respective segment.

### BRIEF DESCRIPTION OF THE DRAWINGS

FIG. 1 is a block diagram of an example segmented software architecture that can enable direct communication between modules of any of the segments.
FIG. 2 is a block diagram illustrating segment modules including interfaces that can enable direct communication between modules of any segment.
FIG. 3 is a block diagram of a device that can implement a segmented software architecture.

### DETAILED DESCRIPTION

According to techniques of this disclosure, a software program can include a plurality of segments, each including one or more modules. The modules can represent computer-readable instructions corresponding to logically-grouped and/or encapsulated operations usable by the software program during execution. Segments can group functionally-related modules to enhance modularity, interchangeability, and reusability of the modules within the segment. Example segments can include, but are not limited to, an application segment, a data repository segment, a data mapping segment, a device driver segment, a services and utilities segment, and an operating system interface segment. Rather than define a strict path for data flow between segments during operation of the software program, each of the modules can implement an interface that enables direct communication between that module and modules included in any other segment. Accordingly, by decreasing a path distance of inter-module communications, techniques of this disclosure can decrease a total number of execution operations associated with data manipulations and communications within the software program. In this way, techniques described herein can enhance efficiency of operations of the software program. In addition, the techniques can help to improve modularity of segments and corresponding modules by enforcing standard interfaces that enable direct communications between modules of any segment. Accordingly, techniques of this disclosure can enhance modularity and testability of the software program.

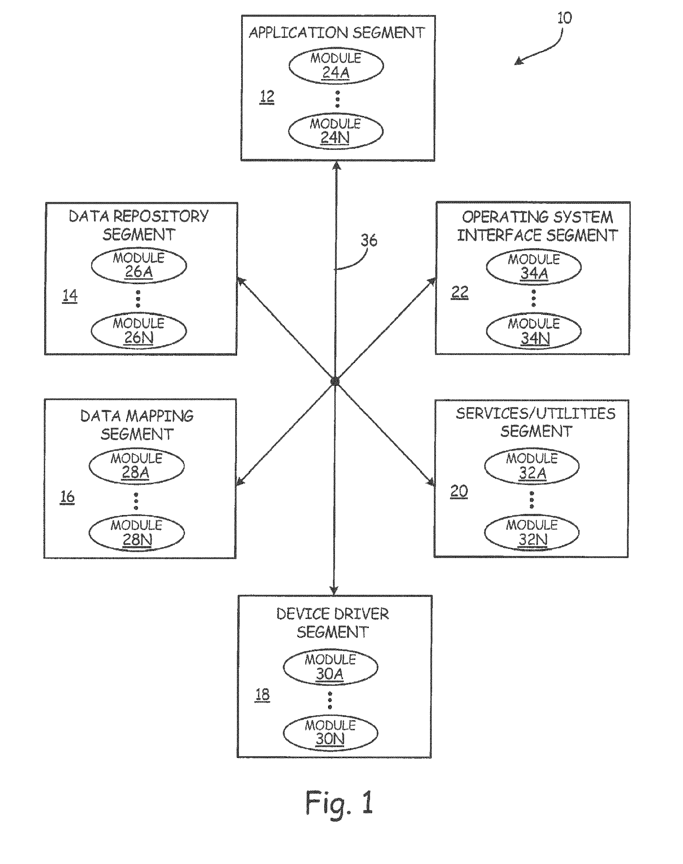

FIG. 1 is a block diagram of segmented software architecture 10 that can enable direct communication between modules of any of the segments. Architecture 10 can be implemented by a software program executing on one or more processors of a device, as is further described below. As one example, the software program can be a Health Usage and Monitoring System (HUMS) executing on an avionics device of an aerial vehicle, such as a helicopter or other aircraft.

As illustrated in FIG. 1, architecture 10 can include application segment 12, data repository segment 14, data mapping segment 16, device driver segment 18, services and utilities segment 20, and operating system interface segment 22. While illustrated in FIG. 1 as including six segments 12, 14, 16, 18, 20, and 22, in some examples, architecture 10 can include more or fewer than six segments.

Each of segments 12, 14, 16, 18, 20, and 22 can include one or more modules. For instance, as illustrated in FIG. 1, application segment 12 can include modules 24A-24N (collectively referred to herein as "modules 24"), data repository segment 14 can include modules 26A-26N (collectively referred to herein as "modules 26"), data mapping segment 16 can include modules 28A-28N (collectively referred to herein as "modules 28"), device driver segment 18 can include modules 30A-30N (collectively referred to herein as "modules 30"), services and utilities segment 20 can include modules 32A-32N (collectively referred to herein as "modules 32"), and operating system interface segment 22 can include modules 34A-34N (collectively referred to herein as "modules 34"). In the example of FIG. 1, the letter "N" is utilized to denote an arbitrary number, such that each of segments 12, 14, 16, 18, 20, and 22 can include any number of modules, such as two, three, four, or more modules. In certain examples, any one or more of segments 12, 14, 16, 18, 20, and 22 can include only one module.

Each of modules 24, 26, 28, 30, 32, and 34 can include computer-readable instructions which, when executed by at least one processor, represent logically-grouped operations and/or encapsulated data usable by the software program during execution. In some examples, each of modules 24, 26, 28, 30, 32, and 34 can include computer-readable instructions that are not combined by a processor until link-time of the software program. Each of segments 12, 14, 16, 18, 20, and 22 can group functionally-related modules. For instance, each of segments 12, 14, 16, 18, 20, and 22 can include member modules having a same set of link-time dependencies.

As illustrated in FIG. 1, architecture 10 can include application segment 12. Application segment 12 can include member modules 24 that are usable by the software program for algorithmic and application-level protocol operations. As an example, one or more of modules 24 can be executable to perform operations that calculate a rotor speed of a rotor of a helicopter. As another example, one or more of modules 24 can be executable to determine and/or aggregate one or more error conditions corresponding to the operation of a device, such as an avionics unit executing the software program.

Data repository segment 14 can include modules 26 that are executable to access computer-readable memory. As an example, modules 26 can operate to implement a real-time data store (e.g., a database), such as a real-time data store with controlled access and protection for access by multiple threads and/or partitions of a real-time operating system. In general, modules 26 included in data repository segment 14 can be operable to access, store, and/or control access to computer-readable memory, such as memory included in one or more computer-readable storage devices.

Data mapping segment 16, as illustrated, can include modules 28. Modules 28 can be executable to convert a format of data, such as data received by and/or to be output from the software program. As one example, one or more of modules 28 can be executable to receive raw data (e.g., from one or more of modules 30 of device driver segment 18) and decode (e.g., map) the data to individual data elements that can be stored in computer-readable memory (e.g., by one or more of modules 26 included in data repository segment 14) and/or consumed by modules included in other segments. In this way, modules 28 of data mapping segment 16 can convert, format, or otherwise manipulate data to act as an intermediary for data exchanges between segments.

Device driver segment 18 can include modules 30 that are executable for operations corresponding to data communications with and/or control of one or more hardware components, such as hardware components of a device executing the software program. For example, one or more of modules 30 can be executable to configure, initialize, and/or communicate with hardware components (e.g., memory devices, communications devices, processors, or other hardware components), respond to hardware interrupts, or other such hardware interactions. In general, modules 30 of device driver segment 18 can provide an interface with hardware components usable by modules of other segments, thereby helping to isolate modules of other segments from dependencies associated with specific hardware components.

Services and utilities segment 20 can include modules 32. Modules 32, in some examples, are executable for operations corresponding to utility (e.g., "helper") functions that can be common to one or more (e.g., each) of segments 12, 14, 16, 18, 20, and 22. Examples of such utility functions can include decoding functions, cyclic redundancy checking functions, queuing functions, math functions, or other utility functions. In some examples, modules 32 can be operable to control the operation of objects in other segments (e.g., segments 12, 14, 16, 18, and/or 22). For instance, modules 32 can be operable to execute an executive service that controls startup, built in test (BIT), and normal execution of modules included in other segments.

Operating system interface segment 22, as illustrated in FIG. 1, can include modules 34. Modules 34 can be executable to interact with an operating system, such as a real-time operating system executing on one or more processors. Example operations to interact with an operating system can include the configuration of hardware interrupts and memory-mapped regions, as well as the configuration of a tasking model for an executive service function (e.g., implemented by modules 32 of services and utilities segment 20).

Each of the modules included in a segment can be executable to interface with other modules included in that segment. For instance, each of modules 24 can communicate (e.g., directly) with others of modules 24, such as via direct function calls or method invocations. Similarly, each of modules 26 can be executable to interface directly with others of modules 26, each of modules 28 can be executable to interface directly with others of modules 28, each of modules 30 can be executable to interface directly with others of modules 30, each of modules 32 can be executable to interface directly with others of modules 32, and each of modules 34 can be executable to interface directly with others of modules 34.

In addition, according to techniques of this disclosure, each of the modules included in a segment can implement an interface that enables direct communication with modules included in any other segment. For example, each of modules 24, 26, 28, 30, 32, and 34 can implement an interface that enables direct communication between any one or more of modules 24, 26, 28, 30, 32, and 34. In this way, modules 24, 26, 28, 30, 32, and 34 can be fully interconnected to enable direct communications via the implemented interfaces. In the example of FIG. 1, direct communications between modules 24, 26, 28, 30, 32, and 34 are illustrated by communication pathways 36. Communication pathways 36 can be implemented as direct function calls, method invocations, or other communication techniques.

In this way, architecture 10 can improve modularity of a software program, thereby enhancing reusability of components (e.g., entire segments and/or modules within segments) of the software program. For instance, because modules within a segment implement a standard interface, modifications to modules of one segment need not impact modules within another segment. In addition, because architecture 10 enables direct communications between segments, data need not pass through intermediate modules to reach a consuming module. For example, rather than require that modules 24 included in application segment 12 route data through, e.g., data repository segment 14 prior to consumption by device driver segment 18, architecture 10 can enable direct communication of data between application segment 12 and device driver segment 18. Accordingly, techniques of this disclosure can enable testing and reuse of modules included one segment without requiring modifications to or even the existence of modules included in another segment. In this way, the techniques can enhance reusability of modules and help to decrease development times corresponding to the software program.

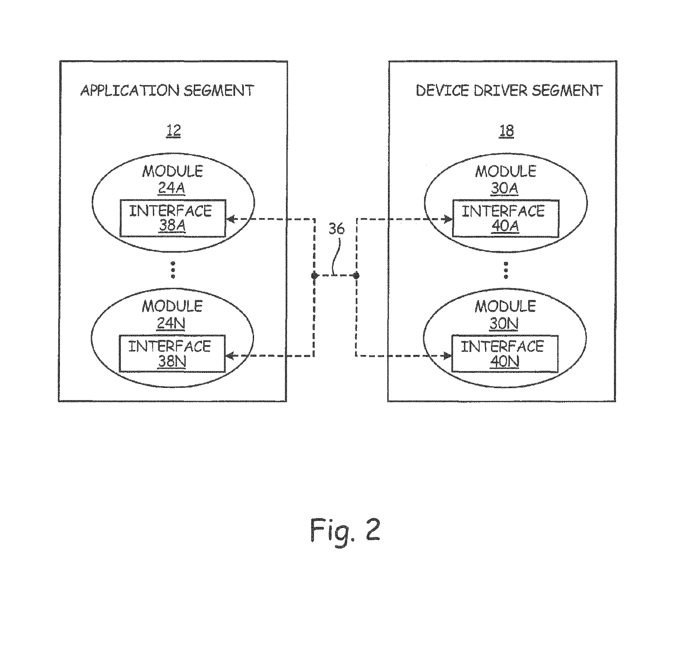

FIG. 2 is a block diagram illustrating modules 24 of application segment 12 and modules 30 of device driver segment 18 implementing interfaces that can enable direct communication between the modules. As illustrated in FIG. 2, modules 24A-24N can include interfaces 38A-38N, respectively (collectively referred to herein as "interfaces 38"). Modules 30A-30N can include interfaces 40A-40N, respectively (collectively referred to herein as "interfaces 40"). Each of interfaces 38 and 40 can enable direct communication between corresponding ones of modules 24 and modules 30 via communication pathways 36. While the example of FIG. 2 is illustrated and described for purposes of discussion with respect to application segment 12 and device driver segment 18, it should be understood that modules of each of the segments of architecture 10 (e.g., modules 24 of application segment 12, modules 26 of data repository segment 14, modules 28 of data mapping segment 16, modules 30 of device driver segment 18, modules 32 of services and utilities segment 20, and modules 34 of operating system interface segment 22) can include interfaces enabling direct communication between the modules of the respective one of segments 12, 14, 16, 18, 20, and 22 and modules of any other of segments 12, 14, 16, 18, 20, and 22.

Interfaces 38 and 40 can define, in some examples, one or more types of communication messages for direct communication with the respective module. In certain examples, interfaces 38 and 40 can define one or more data parameters corresponding to the one or more types of communication messages. For instance, interfaces 38 and 40 can each define a set of function parameters, a set of enumerated data types, a set of return values, or other information for direct communication with the respective module. In some examples, each of the modules of a segment (e.g., each of modules 24, each of modules 30, etc.) can implement an interface that is common to all modules of the segment. A common interface can be considered an interface that defines a common format for direct communications with the respective module, such as a common set of communication messages and/or data parameters corresponding to the communication messages. For instance, each of interfaces 38 can be a same interface. Similarly, each of interfaces 40 can be a same interface. In certain examples, the common interface implemented by the modules included in a segment can differ between segments. For instance, a common interface implemented by modules 24 (e.g., common interfaces 38) can be a different interface than a common interface implemented by modules 30 (e.g., common interfaces 40), such that each of the common interfaces specify different interface definitions and/or parameters.

As one example implementation, application segment 12 can be associated with an abstract base class defining a common interface associated with application segment 12. Modules 24 can be implemented using classes that inherit from the abstract base class, thereby inheriting the common interface definition. Similarly, modules 30 can inherit from an abstract base class defining a common interface associated with application segment 18, thereby inheriting the common interface definition. Accordingly, in some examples, each module of a segment can implement a common interface for direct communications with the respective module.

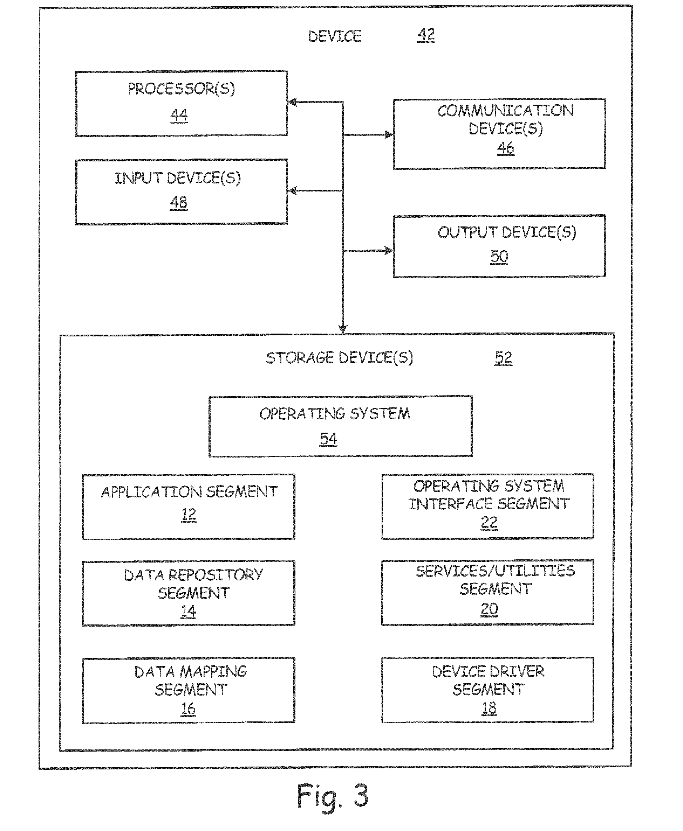

FIG. 3 is a block diagram of device 42 that can implement segmented software architecture 10. Device 42 can be any device capable of executing computer-readable instructions defining a software program implementing architecture 10. Examples of device 42 can include, but are not limited to, laptop computers, mobile phones (including smartphones), tablet computers, personal digital assistants (PDAs), desktop computers, servers, mainframes, or other computing devices. In some examples, device 42 can be an avionics unit configured for use on an aerial vehicle, such as a helicopter, unmanned aerial vehicle (UAV), or other aircraft.

As illustrated in FIG. 3, device 42 can include processor(s) 44, communications device(s) 46, input device(s) 48, output device(s) 50, and storage device(s) 52. However, in certain examples, device 42 can include more or fewer components than components 44, 46, 48, 50, and 52. For instance, in examples where device 42 is an avionics unit, device 42 may not include input device(s) 48 and/or output device(s) 50. In some examples, such as where device 42 is a mobile or portable device such as a laptop computer, device 42 may include additional components such as a battery that provides power to components of device 42 during operation.

Processor(s) 44, in one example, are configured to implement functionality and/or process instructions for execution within device 42. For instance, processor(s) 44 can be capable of processing instructions stored in storage device(s) 52. Examples of processor(s) 44 can include any one or more of a microprocessor, a controller, a digital signal processor (DSP), an application specific integrated circuit (ASIC), a field-programmable gate array (FPGA), or other equivalent discrete or integrated logic circuitry.

Storage device(s) 52 can be configured to store information within device 42 during operation. Storage device(s) 52, in some examples, are described as computer-readable storage media. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). In some examples, storage device(s) 52 are a temporary memory, meaning that a primary purpose of storage device(s) 52 is not long-term storage. Storage device(s) 52, in some examples, are described as volatile memory, meaning that storage device(s) 52 do not maintain stored contents when power to device 42 is turned off. Examples of volatile memories can include random access memories (RAM), dynamic random access memories (DRAM), static random access memories (SRAM), and other forms of volatile memories. In some examples, storage device(s) 52 are used to store program instructions for execution by processor(s) 44. Storage device(s) 52, in one example, are used by software or applications running on device 42 (e.g., a software program implementing architecture 10) to temporarily store information during program execution.

Storage device(s) 52, in some examples, also include one or more computer-readable storage media. Storage device(s) 52 can be configured to store larger amounts of information than volatile memory. Storage device(s) 52 can further be configured for long-term storage of information. In some examples, storage device(s) 52 include non-volatile storage elements. Examples of such non-volatile storage elements can include magnetic hard discs, optical discs, floppy discs, flash memories, or forms of electrically programmable memories (EPROM) or electrically erasable and programmable (EEPROM) memories.

Device 42, in some examples, also includes communications device(s) 46. Device 42, in one example, utilizes communication device(s) 46 to communicate with external devices via one or more networks, such as one or more wireless or wired networks or both. Communications device(s) 46 can be a network interface card, such as an Ethernet card, an optical transceiver, a radio frequency transceiver, or any other type of device that can send and receive information. Other examples of such network interfaces can include Bluetooth, 3G, 4G, and WiFi radio computing devices as well as Universal Serial Bus (USB).

Device 42, in some examples, also includes input device(s) 48. Input device(s) 48, in some examples, are configured to receive input from a user. Examples of input device(s) 48 can include a mouse, a keyboard, a microphone, a camera device, a presence-sensitive and/or touch-sensitive display, or other type of device configured to receive input from a user.

Output device(s) 50 can be configured to provide output to a user. Examples of output device(s) 50 can include a display device, a sound card, a video graphics card, a speaker, a cathode ray tube (CRT) monitor, a liquid crystal display (LCD), a light emitting diode (LED) display, an organic light emitting diode (OLED) display, or other type of device for outputting information in a form understandable to users or machines.

As illustrated in FIG. 3, storage device(s) 52 can include operating system 54, application segment 12, data repository segment 14, data mapping segment 16, device driver segment 18, services and utilities segment 20, and operating system interface segment 22. Operating system 54 can be executable by processor(s) 44 to control the operation of components of device 42. For instance, operating system 54, in one example, facilitates the communication of a software program implementing architecture 10 with processor(s) 44, communications device(s) 46, input device(s) 48, and/or output device(s) 50. In some examples, operating system 54 can be a real-time operating system (RTOS) that schedules execution of applications executing on processor(s) 44 and serves real-time application requests, such as requests for access to storage device(s) 52 (e.g., read and/or write requests).

Accordingly, device 42 illustrates one example embodiment of a device that can execute a software program including a plurality of segments that each includes one or more modules implementing an interface that enables direct communication between the respective module and modules that are members of any other of the plurality of segments.

The following are non-exclusive descriptions of possible embodiments of the present invention.

A device includes at least one processor and one or more storage devices encoded with instructions that, when executed by the at least one processor, cause the at least one processor to execute a software program comprising three or more segments. Each of the three or more segments includes one or more modules. Each respective module is a member of only one of the three or more segments and implements an interface that enables direct communication between the respective module and modules that are members of any other of the three or more segments. All modules that are members of a respective segment implement a common interface associated with the respective segment.

The device of the preceding paragraph can optionally include, additionally and/or alternatively, any one or more of the following features, configurations and/or additional components:

The common interfaces associated with each respective segment can differ between segments.

The interface implemented by each respective module can define one or more types of communication messages for direct communication with the respective module and one or more data parameters corresponding to the one or more types of communication messages.

Each respective one of the three or more segments can be associated with an abstract base class that defines the common interface associated with the respective segment. Each respective module included in the respective one of the three or more segments can inherit the common interface from the abstract base class.

The three or more segments can include an application segment. Each of the one or more modules included in the application segment can be executable by the at least one processor for operations corresponding to application-level protocol operations.

The three or more segments can include a data repository segment. Each of the one or more modules included in the data repository segment can be executable by the at least one processor to access memory of the one or more storage devices.

The three or more segments can include a data mapping segment. Each of the one or more modules included in the data mapping segment can be executable by the at least one processor to convert a format of data.

The three or more segments can include a device driver segment. Each of the one or more modules included the device driver segment can be executable by the at least one processor for operations corresponding to at least one of data communications with and control of one or more hardware components of the device.

The three or more segments can include a services and utilities segment. Each of the one or more modules included in the services and utilities segment can be executable by the at least one processor for operations corresponding to utility functions common to each of the three or more segments.

The three or more segments can include an operating system interface segment. Each of the one or more modules included in the operating system interface segment can be executable by the at least one processor to interact with an operating system executing on the at least one processor.

A computer-readable storage medium is encoded with instructions that, when executed by at least one processor, cause the at least one processor to execute a software program comprising three or more segments. Each of the three or more segments includes one or more modules. Each respective module is a member of only one of the three or more segments and implements an interface that enables direct communication between the respective module and modules that are members of any other of the three or more segments. All modules that are members of a respective segment implement a common interface associated with the respective segment.

The computer-readable storage medium of the preceding paragraph can optionally include, additionally and/or alternatively, any one or more of the following features, configurations, instructions and/or additional components:

The common interfaces associated with each respective segment can differ between segments.

The interface implemented by each respective module can define one or more types of communication messages for direct communication with the respective module and one or more data parameters corresponding to the one or more types of communication messages.

Each respective one of the three or more segments can be associated with an abstract base class that defines the common interface associated with the respective segment. Each respective module included in the respective one of the three or more segments can inherit the common interface from the abstract base class.

The three or more segments can include an application segment, a device driver segment, and a data repository segment.

While the invention has been described with reference to an exemplary embodiment(s), it will be understood by those skilled in the art that various changes may be made and equivalents may be substituted for elements thereof without departing from the scope of the invention as defined by the claims. In addition, many modifications may be made to adapt a particular situation or material to the teachings of the invention without departing from the scope thereof. Therefore, it is intended that the invention not be limited to the particular embodiment(s) disclosed, but that the invention will include all embodiments falling within the scope of the appended claims.

## Claims

1. A device comprising:
at least one processor (44); and
one or more storage devices (52) encoded with instructions that, when executed by the at least one processor, cause the at least one processor to execute a software program comprising three or more segments (12, 14, 16, 18, 20, 22), each of the three or more segments including one or more modules (24, 26, 28, 30, 32, 34), wherein each respective module is a member of only one of the three or more segments and implements an interface that enables direct communication between the respective module and modules that are members of any other of the three or more segments, and wherein all modules that are members of a respective segment implement a common interface (38, 40) associated with the respective segment.

2. The device of claim 1, wherein the common interfaces associated with each respective segment differ between segments.

3. The device of claim 1, wherein the interface implemented by each respective module defines one or more types of communication messages for direct communication with the respective module and one or more data parameters corresponding to the one or more types of communication messages.

4. The device of claim 1,
wherein each respective one of the three or more segments is associated with an abstract base class that defines the common interface associated with the respective segment; and
wherein each respective module included in the respective one of the three or more segments inherits the common interface from the abstract base class.

5. The device of claim 1,
wherein the three or more segments include an application segment (12); and
wherein each of the one or more modules included in the application segment are executable by the at least one processor for operations corresponding to application-level protocol operations.

6. The device of claim 1,
wherein the three or more segments include a data repository segment (14); and whe
rein each of the one or more modules included in the data repository segment are executable by the at least one processor to access memory of the one or more storage devices.

7. The device of claim 1,
wherein the three or more segments include a data mapping segment (16); and whe
rein each of the one or more modules included in the data mapping segment are executable by the at least one processor to convert a format of data.

8. The device of claim 1,
wherein the three or more segments include a device driver segment (18); and
wherein each of the one or more modules included the device driver segment are executable by the at least one processor for operations corresponding at least one of data communications with and control of one or more hardware components of the device.

9. The device of claim 1,
wherein the three or more segments include a services and utilities segment (20); and
wherein each of the one or more modules included in the services and utilities segment are executable by the at least one processor for operations corresponding to utility functions common to each of the three or more segments.

10. The device of claim 1,
wherein the three or more segments include an operating system interface segment (22); and
wherein each of the one or more modules included in the operating system interface segment are executable by the at least one processor to interact with an operating system executing on the at least one processor.

11. A computer-readable storage medium encoded within instructions that, when executed by at least one processor, cause the at least one processor to:
execute a software program comprising three or more segments, each of the three or more segments including one or more modules, wherein each respective module is a member of only one of the three or more segments and implements an interface that enables direct communication between the respective module and modules that are members of any other of the three or more segments, and wherein all modules that are members of a respective segment implement a common interface associated with the respective segment.

12. The computer-readable storage medium of claim 11, wherein the common interfaces associated with each respective segment differ between segments.

13. The computer-readable storage medium of claim 11, wherein the interface implemented by each respective module defines one or more types of communication messages for direct communication with the respective module and one or more data parameters corresponding to the one or more types of communication messages.

14. The computer-readable storage medium of claim 11,
wherein each respective one of the three or more segments is associated with an abstract base class that defines the common interface associated with the respective segment; and
wherein each respective module included in the respective one of the three or more segments inherits the common interface from the abstract base class.

15. The computer-readable storage medium of claim 11, wherein the three or more segments include an application segment, a device driver segment, and a data repository segment.
